# EUROPEAN PATENT SPECIFICATION

(11) **EP 4 006 248 B1**
(45) Date of publication and mention of the grant of the patent: **07.06.2023**
(21) Application number: 21210338.6
(22) Date of filing: 25.11.2021
(51) Int. Cl.: E04B 1/94, F16L 5/04

(54) **FIRESTOP BOARD, FIRESTOP ELEMENT AND FIRE SEPARATING ELEMENT**
BRANDSCHUTZPLATTE, BRANDSCHUTZELEMENT UND BRANDTRENNELEMENT
PANNEAU COUPE-FEU, ÉLÉMENT COUPE-FEU ET ÉLÉMENT SÉPARATEUR DE FEU

(30) Priority: 27.11.2020 FI 20206210
(43) Date of publication of application: 01.06.2022
(73) Proprietor: FF-Future Oy, 24100 Salo (FI); Tulisuoja Suomi Oy, 24100 Salo (FI)
(72) Inventor: SIMOLA, Jarmo, 20100 Turku (FI); LE BELL, Jean, 20500 Turku (FI)
(74) Representative: Berggren Oy

(56) References cited:
- WO-A2-2005/078884
- US-A1- 2012 135 202

## Description

### Field of the invention

The invention relates to a firestop board according to the preamble of the appended independent claim, and a firestop element comprising a firestop board, as well as a fire separating element comprising a firestop board and/or a firestop element according to the invention.

### Background of the invention

A fire stop refers to the sealing of technical building systems, such as water and sewage pipes, air ducts, radiator pipes, electric cables as well as other pipes, conduits and cables, which are conveyed through fire separating elements, and their through holes, to form a structure corresponding to fire compartmentation. A fire stop is used as a sealing and as refractory insulation to prevent flames, heat and flue gases from spreading via through-holes in a building in case of fire damage. A fire stop can be formed by one or more building products which are installed permanently in the construction and whose fire technical properties restrict the spreading of fire and smoke via through-holes in fire separating elements. Fire stops meeting the requirements of building regulations are needed in fire separating elements, such as walls, intermediate floors and roof structures. Similar fire stops are also used in vehicles, such as trains and ships.

Typically, fire stops consist of one or more building products which are used to provide fire technical properties relating to fire compartmentation, such as sealing and insulation for a given fire resistance period (in minutes). The fire resistance period in minutes is indicated by one of the following figures: 15, 30, 45, 60, 90, 120, 180, or 240. Fire resistance of a fire stop to be installed in a through hole of a fire separating element normally means that the fire stop meets the requirements of sealing and insulation performance for a given fire resistance period (standard EN1366-3:2009). For fire stop installation of through holes for pipes and cables, several alternatives are available, such as sealing the through hole with a suitable fire stop mass or sealing the through hole with mineral wool. The through hole can also be sealed by installing a fire stop collar around the pipe. The aim here is to seal the through hole which is left open in case the pipe, cable or conduit melts in a fire. Modular fire stops are also used, which consist of ready-made parts installed in dimensionally accurate through holes.

The publication WO2005/078884 discloses a fire stop system, which comprises first and second fire-resistant parts for fire-resistant sealing of an opening in a wall through which at least one cable or the like has been fed.

The publication US2012/135202 discloses a fire protected insulation system, which comprises an expanded polymer layer and a high strength polymeric flame retardant layer.

Ready-made products used as fire stops are factory-made products which can be installed on site, for example upon placing of concrete or in a through hole made in the construction afterwards. The use of these prefabricated fire stop products requires that the technical system to be led through as well as its precise location are defined in the plans at a sufficiently early stage. The above-presented solutions of prior art require that the fire stop be designed in advance, according to the through holes to be made. Fire stops of prior art are designed from the point of view of the pipe or cable to be led through. This is time consuming, slow and expensive. In the field, there is a need for simpler solutions which make it possible to provide fireproofed through holes in the fire separating elements easily and without separate additional steps.

### Object and description of the invention

An object of the present invention is to reduce or even eliminate the above-mentioned problems present in prior art.

It is an object of this invention to present a firestop board and a firestop element comprising at least one firestop board, which can be built as a finished part of the structure of the fire separating element, and which firestop board and/or firestop element can be provided with fireproofed through holes where needed, without precise designing in advance.

Consequently, it is an object of the invention to present a novel type of a firestop board and firestop element as well as a fire separating element comprising one or more firestop boards and/or firestop elements in advance before making the through holes.

It is an object of the invention to present a firestop board and a firestop element which are light in weight and easy to install, and which firestop board/boards and/or firestop element/elements can be used to construct larger surfaces ready for a fire separating element, and which surfaces can be provided with through holes later on, where necessary. It is an object of the invention to present a firestop board and a firestop element which can be installed in prefabricated building elements or, alternatively, they can be installed at the construction site.

To achieve this object, the firestop board, the firestop element and the fire separating element according to the invention are primarily characterized in what will be presented in the characterizing parts of the independent claims.

The other, dependent claims will present some preferred embodiments of the invention.

A typical firestop board according to the invention, in which one or more through holes for pipes, conduits and/or cables is/are arrangeable, and which firestop board expands in a fire situation sealing the through hole, comprises in at least 40 weight-% of foamed closed-cell polymer material and in 10 - 50 weight-% of expandable graphite, calculated from the weight of the board, wherein the density of the material of the firestop board is 80 - 400 kg/m³, and which firestop board is made of foamed closed-cell polymer material in which the expandable graphite is blended. Thus, the firestop board according to the invention is used as a fire stop as such.

A typical firestop element according to the invention, in which one or more through holes for pipes, conduits and/or cables is/are arrangeable, comprises at least one firestop board according to the invention, and the firestop element further comprises a framework around the firestop board/boards, and/or the firestop element comprises a building board arranged on at least one surface of the firestop board for covering the firestop board.

A typical fire separating element according to the invention comprises a fire stop formed by providing a structure with at least one firestop board and/or firestop element according to the invention. A fire separating element refers to a structural element of the building separating fire compartments which meet a fire resistance requirements.

A typical fire separating element according to the invention comprises a fire separating wall structure comprising one or more firestop boards and/or firestop elements according to the invention. However, the fire separating element according to the invention may be any other fire separating building element as well, for example a floor or roof structure. The fire separating element according to the invention may be a structural element of a building, or a structural element of a vehicle, such as a train or a ship.

A typical method according to the invention for forming a fire stop in a fire separating element, such as a fire separating wall structure, comprises:
- arranging at least one firestop board and/or firestop element according to the invention as a part of a fire separating structure, and
- providing the firestop board and/or firestop element with a dimensionally accurate opening for a through hole, where necessary, and arranging a pipe, conduit and/or cable to be passed via the through hole without separate sealing.

The invention is based on a firestop board made of a foamed closed-cell polymer material blended with expandable graphite, wherein for passing the pipes, conduits and/or cables through, said ready-made firestop board used as the firestop material is provided with through holes which match accurately with the pipe, conduit and/or cable to be passed through. The firestop according to the invention comprises one or more firestop boards comprising foamed polymer material and expandable graphite. The firestop board according to the invention is formed of foamed polymer material which is light in weight, and consequently, the firestop board or a firestop element comprising the firestop board according to the invention is easy to install and it can be manufactured even in large surfaces for a fire separating element. The firestop board according to the invention can be formed in any shape, and its size and shape can be easily modified; in this way, its shape does not have to be determined in advance. A typical firestop element according to the invention comprises one or more firestop boards according to the invention. In a preferred embodiment of the invention, expandable graphite and inorganic additives are blended into the polymer material to be foamed to obtain desired fireproofing properties, and the material is cast into a desired shape, typically the shape of a board. The formed firestop board can be cut to a suitable size before it is installed as a part of a firestop element and/or a fire separating element.

In a firestop board according to the invention, through holes can be made directly in the firestop board, where necessary, and the through holes can be sealed by means of the material of the firestop board. In a fire situation, the material of the firestop board according to the invention will expand and seal the through hole which is left open as the pipe, cable and/or conduit melts. The firestop board according to the invention is made of a material which expands upon being subjected to heat and/or in a fire situation. In this way, using the firestop board or a firestop element comprising a firestop board according to the invention, there is no need for separate prefabricated fireproof products or collars or fire-retardant masses for sealing the through holes around the pipes, conduits or cables to be passed through. Furthermore, the material of the firestop board according to the invention maintains its panel-like shape in a fire situation. In this way, the material of the firestop board does not set limits to the outer dimensions of the firestop board according to the invention, but the size of firestop boards can be freely selected and fitted according to the use.

The firestop board according to the invention does not set restrictions to the number and/or diameter of pipes, conduits and/or cables to be passed through. Cables, conduits, metal and plastic pipes as well as insulated pipes, and the like, can be conveyed through the firestop element according to the invention. The firestop element according to the invention can be used for any type of through holes. In a fire situation, the material of the firestop board expands and presses against the pipe/conduit passed through. When installing pipes, conduits and/or cables to be passed through, dimensionally accurate through holes are drilled for them in a firestop board according to the invention used as the fire stop, and in board structures possibly covering its surfaces. For each pipe, conduit or cable to be passed through, a separate dimensionally stable through hole is drilled, whereby separate sealing material will not be needed for the through holes.

The firestop board according to the invention comprises foamed polymer material, and thereby the firestop board according to the invention also has a good heat insulation properties and it does not form a cold bridge through the structure.

### Brief description of the drawings

In the following, the invention will be described in more detail with reference to the appended drawings, in which
- Fig. 1: shows a firestop board according to an embodiment of the invention, and
- Fig. 2: shows a separating element according to an embodiment of the invention, comprising a firestop board or a firestop element according to the invention, and a through hole arranged in it.

### Detailed description of the invention

In a simplest embodiment, the fire stop according to the invention is a single uniform firestop board which can be provided with one or more through holes and which firestop board has a first surface and a second surface, and which board comprises foamed closed-cell polymer material and expandable graphite, and which firestop board has a material density of 80 to 400 kg/m³. In some other embodiments of the invention, two or more firestop boards according to the invention are placed tightly against each other to form a uniform surface which can be provided with one or more through holes and which boards comprise foamed closed-cell polymer material and expandable graphite, the material density of the boards being 80 to 400 kg/m³. A typical firestop element according to the invention comprises at least one firestop board according to the invention. The lower the material density of the firestop board, the easier the firestop board is to handle and install, whereas higher density of the firestop board brings improved fireproofing properties.

The firestop board according to the invention comprises foamed closed-cell polymer material and expandable graphite. The firestop board according to the invention is made by blending expandable graphite into polymer material to be foamed, and by casting the material into a desired shape of a board. Thus, the material of the firestop board according to the invention is homogeneous, the expandable graphite being evenly distributed in the polymer material over the whole volume of the firestop board. In a firestop board according to the invention, the foamed closed-cell polymer material comprises polyurethane (PU or PUR), polyisocyanurate (PIR), polyurea, or a combination of these. In the invention, the foamed closed-cell polyurethane, polyisocyanurate and/or polyurea material, in which the expandable graphite is blended, is formed into a firestop board. Polyurethane is formed in a reaction between isocyanate and polyol, and by means of a propellant, the polymer matrix can be made foamy and closed-cell, which can be cast into a desired shape. Polyisocyanurate is formed in the same way as polyurethane, but a greater amount of isocyanate is used in the reaction with polyol. The isocyanate used in the preparation of foamed PUR or PIR material can be a diisocyanate, such as methylene diphenyl diisocyanate (MDI), toluene diisocyanate (TDI), or a combination of these. In some embodiments of the invention, the foamed closed-cell polymer material comprises polyurea which is formed in a reaction between amine and isocyanate. In the firestop board according to the invention, any foamed polymer material suitable for the use can be applied, in addition to those mentioned above. The firestop board according to the invention comprises foamed closed-cell polymer material in at least about 40 weight-%, calculated from the weight of the firestop board. Thus, a sufficiently strong structure for the firestop board is achieved with the foamed polymer material. A firestop board according to an embodiment of the invention comprises foamed closed-cell polymer material in 40 to 75 weight-%, preferably 40 to 60 weight-%, 40 to 55 weight-% or 40 to 50 weight-%, calculated from the weight of the board, wherein the desired strength as well as expandability and fireproofing properties are obtained for the firestop board. The amount of foamed polymer material impacts on the fireproofing properties of the firestop board according to the invention. The fire resistance properties of the firestop board according to the invention are improved when the content of polymer material in the board is reduced and the content of foamed polymer material is, for example, about 40 to 50 weight-% or 40 to 55 weight-%, calculated from the weight of the board. In the firestop board according to the invention, expandable graphite has been added into the polymer material to be foamed. The expandable graphite has thus been blended into the polymer material, and a firestop board has been formed of the blended material. According to one embodiment of the invention, a firestop board formed of foamed polymer material comprises 10 to 50 weight-% or 15 to 50 weight-% of expandable graphite, calculated from the weight of the board. In some embodiments according to the invention, the firestop board may comprise 15 to 35 weight-%, 15 to 30 weight-% or 20 to 30 weight-% of expandable graphite, calculated from the weight of the board. In the firestop board according to the invention, the expandable graphite is used as a fireproofing agent which expands in a fire situation and thus, together with carbonized material, seals the through holes in the firestop board. According to an embodiment of the invention, the expandable graphite is expandable graphite which expands at least 200% of its own volume in a fire situation. According to an embodiment of the invention, the expandable graphite is in the form of flakes and has an average particle size of at least 100 µm, typically at least 150 µm or 175 µm. In an embodiment according to the invention, the expandable graphite has an average particle size between 100 and 500 µm. In a typical firestop board according to the invention, expandable graphite is used which starts to expand at a temperature of 170 to 250 °C and has a carbon content of about 85% to 99%. In an embodiment of the invention, the firestop board may also comprise graphite power in addition to the expandable graphite.

In an embodiment of the invention, the firestop board further comprises one or more inorganic additives to make the foamed polymer material slow-burning and carbonizable in a fire situation; as a result, the board structure of the firestop board will maintain its primary shape better in a fire situation. In a firestop board according to an embodiment of the invention, expandable graphite and one or more inorganic additives have been added into the polymer material to be foamed. According to an embodiment of the invention, the inorganic additive comprises one or more phosphates, carbonates and/or boron compounds. According to an embodiment of the invention, the inorganic additive comprises an inorganic powder and/or powders which are used as fire-extinguishing powders, such as ammonium sulphate, calcium carbonate, and/or sodium bicarbonate. According to an embodiment of the invention, the inorganic additive comprises aluminium hydroxide, magnesium hydroxide, monopotassium phosphate, monoammonium phosphate (ammonium dihydrogen phosphate), ammonium sulphate, calcium sulphate, hydrated calcium sulphate, sodium bicarbonate, potassium carbonate, calcium carbonate, magnesium carbonate, borax, or a combination of any of these. A firestop board according to an advantageous embodiment of the invention comprises monoammonium phosphate, sodium bicarbonate and/or borax. The borax may be any compound of boron and sodium, irrespective of the amount of hygroscopic water. In an embodiment of the invention, the inorganic additive further comprises a silicate, such as sodium metasilicate, for improving the fireproofing properties of the firestop board. In an embodiment according to the invention, the inorganic additive is a mixture of two or more substances selected from phosphates, carbonates, boron compounds, and silicates. In an embodiment of the invention, the inorganic additive comprises a mixture of phosphates, carbonates, boron compounds, and silicates.

In an embodiment of the invention, the firestop board comprises an inorganic additive in 10 to 50 weight-% or 15 to 50 weight-%, calculated from the weight of the board. In some embodiments according to the invention, the firestop board may comprise 15 to 35 weight-%, 15 to 30 weight-%, or 20 to 30 weight-% of an inorganic additive, calculated from the weight of the board.

The firestop board according to an embodiment of the invention comprises at least 40 weight-% of foamed closed-cell polymer material, 10 to 50 weight-% of expandable graphite, and 10 to 50 weight-% of inorganic additive/additives. In an embodiment according to the invention, the firestop board comprises 40 to 50 weight-% of foamed polymer material, 15 to 30 weight-% of expandable graphite, and 20 to 35 weight-% of inorganic additive/additives. In another embodiment according to the invention, the firestop board comprises 40 to 50 weight-% or about 50 weight-% of foamed polymer material, 20 to 30 weight-% of expandable graphite, and 20 to 30 weight-% of inorganic additive/additives.

The firestop board according to an embodiment of the invention may further comprise reinforcing fibres. In an exemplary embodiment, the reinforcing fibres may be mineral or ceramic fibres. In an embodiment according to the invention, the firestop board comprises reinforcing fibres having a diameter of, for example, about 5 to 20 µm and a length of about 0.1 to 10 mm, preferably 0.1 to 5 mm or 0.5 to 5 mm. By means of the reinforcing fibres, the strength of the board structure can be maintained better in a fire situation; particularly in the case of thinner firestop boards, the reinforcing fibres provide increased strength in a fire situation.

A firestop board according to an embodiment of the invention has parallel first and second large surfaces. The large surfaces of the firestop board are typically planar. According to an embodiment of the invention, the distance between the surfaces of the firestop board, i.e. the thickness of the firestop board, is at least about 10 mm. The thickness of the firestop board according to the invention will depend on the use, the materials of the firestop board, and possible building boards installed on the surface of the firestop board, as well as the desired fire resistance rating. If the firestop board according to the invention, used as a fire stop, is covered with separate building boards at the point of use, for example with steel sheet, gypsum sheet and/or MgO board, a smaller thickness and density will be sufficient for the firestop board than in a case where the firestop board is used without being covered by building boards in a fire separating element.

A firestop element according to the invention comprises at least one firestop board according to the invention, and furthermore, the firestop element comprises a framework around the firestop board/boards, and/or the firestop element comprises a building board arranged to cover at least one surface of the firestop board. In an embodiment according to the invention, a building board, such as a steel sheet, a gypsum board and/or an MgO board, covers the firestop board at least partly, typically completely. According to an embodiment of the invention, at least one surface of the firestop board according to the invention is provided with a building board covering the firestop board; preferably, both surfaces of the firestop board are provided with a building board covering the firestop board. Thus, the firestop board and/or firestop element according to the invention may be part of a fire separating element, and it can be covered in the same way as the other parts of the structure of the building. In an exemplary embodiment, the building board may comprise a steel sheet, a gypsum board, and/or an MgO board.

The firestop element according to an embodiment of the invention comprises a framework around the firestop board. Typically, the firestop element comprises a framework made of an incombustible material around the firestop board. Typically, the width of the lateral surfaces forming the framework corresponds to the thickness of the firestop board, and the framework is arranged around to the firestop board to cover the lateral surfaces of the firestop board in the thickness direction. The framework facilitates the installation of the firestop element. Moreover, in case of a firestop element having a smaller size, the framework around the firestop board will increase sealing pressure in a fire situation.

The firestop board or firestop element according to the invention may be installed as part of a fire separating element already during construction. The size of the firestop board and firestop element according to the invention in the fire separating element is freely selectable, and the materials of the firestop board do not set limits to the dimensions of the firestop board or the firestop element. In an exemplary embodiment, the size of a firestop board may be 600 mm x 300 mm, or the firestop board or boards may be arranged substantially over the whole length and/or width direction of the fire separating element in the construction.

The firestop board and/or firestop element according to the invention is part of the fire separating element, and it can be provided with desired through holes, where necessary. The material of the firestop board according to the invention allows the provision of dimensionally stable through holes. The firestop board according to the invention can be provided with through holes according to, for example, standard EN1366-3:2009, and the firestop board according to the invention meets the requirements of the standard in a fire situation.

A fire separating element according to the invention comprises at least one firestop board and/or firestop element according to the invention. The fire separating element may comprise several firestop boards and/or firestop elements according to the invention. One or more through holes can be arranged in a firestop board or firestop element according to the invention. A firestop board and/or firestop element according to the invention can be formed as part of a fire separating element already during construction. The firestop board(s) and/or firestop element thus constitute a part of the fire separating element already before making the through holes, and the through holes do not need to be designed in advance, before the installation of the firestop board and/or the firestop element in the construction. This is an advantageous and time-saving way to implement a fire stop around the through holes.

The fire separating element according to the invention may be a fire separating wall structure. The fire separating wall structure may comprise a studwork in the horizontal and vertical directions around the firestop board and/or the firestop element.

A method according to the invention for forming a fire stop in a fire separating element, for at least one through hole, comprises:
- arranging at least one firestop board and/or firestop element according to the invention as part of a fire separating element, and
- providing the firestop board and/or firestop element with a dimensionally stable through hole.

The firestop board or firestop element according to the invention does not require separate sealing of the through hole afterwards, for example with a fireproofing mass or a corresponding sealing agent. For providing a fireproof through hole in a firestop board or firestop element according to the invention, it is sufficient to make a hole of a suitable size in the firestop board and possible board structures covering it, and to install a pipe, conduit or cable in this through hole. The firestop board according to the invention, as well as the firestop element comprising at least one firestop board, is also light in weight, so that it is easy to install and handle.

### Detailed description of the drawings

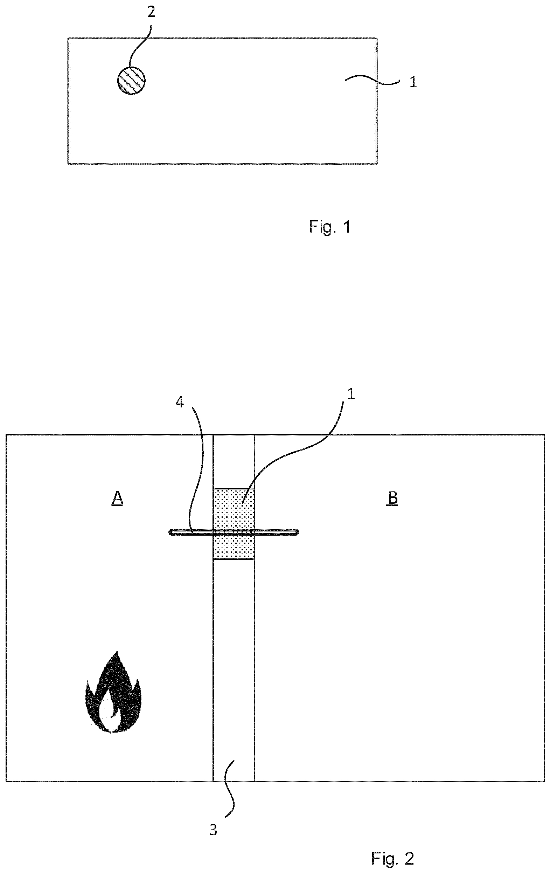

Figure 1 illustrates a firestop board 1 according to an embodiment of the invention. The firestop board can be provided with one or more through holes 2.

Figure 2 illustrates the principle of operation of the firestop board 1 according to the invention in a fire situation: the through hole made through the fire separating element maintains compartmentation according to the requirements, whereby it is safe to leave the building. The figure shows a compartment A having a fire situation, and a compartment B. The figure shows a fire separating wall structure 3 according to the invention between the compartments, the fire separating wall structure 3 comprising a firestop board 1 according to the invention or a firestop element comprising a firestop board. The firestop board is provided with a through hole for a pipe or a cable 4.

### Examples

Burning tests 1 to 3 according to the examples were carried out according to standard EN 1366-3:2009. The test arrangement was compliant with standard EN 1366-3:2009 Annex B.

### Burning test 1:

In the burning test, a firestop element according to the invention was used, comprising a firestop board having a material density of 85 kg/m³. The firestop board was made in 47 weight-% of polyisosyanuarate, 18 weight-% of expandable graphite (Mesh 80, carbon content 90%, expandability 200%), and 35 weight-% of monoammonium phosphate. The thickness of the firestop board was 100 mm.

A framework of non-combustible material was provided around the firestop board. On both sides of the firestop board, the surfaces were covered with 3 mm MgO boards. These boards were installed to represent a wall surface, and they had no significant effect on the functionality of the firestop element.

The firestop element fulfilled the requirements of standard EN 1366-3:2009 for 60 min.

### Burning test 2:

In the burning test, a firestop element according to the invention was used, comprising a firestop board having a material density of 200 kg/m³. The firestop board was made in 47 weight-% of polyisosyanuarate, 18 weight-% of expandable graphite (Mesh 80, carbon content 90%, expandability 200%), and 35 weight-% of monoammonium phosphate. The thickness of the firestop board was 100 mm.

A framework of non-combustible material was provided around the firestop board. The surfaces were not covered with MgO boards on either side of the firestop board.

The firestop element fulfilled the requirements of standard EN 1366-3:2009 for 60 min.

### Burning test 3:

In the burning test, a firestop element according to the invention was used, comprising a firestop board having a material density of 120 kg/m³. The firestop board was made in 50 weight-% of polyisosyanuarate, 30 weight-% of expandable graphite (Mesh 80, carbon content 90%, expandability 200%), and 20 weight-% of monoammonium phosphate. The thickness of the firestop board was 50 mm.

A framework of non-combustible material was provided around the firestop board. On both sides of the firestop board, the surfaces were covered with 3 mm MgO boards.

The firestop element fulfilled the requirements of standard EN 1366-3:2009 for 30 min.

## Claims

1. A firestop board (1), in which one or more through holes (2) for pipes, conduits and/or cables is arrangeable, and which firestop board expands in a fire situation, sealing the through hole, wherein the firestop board (1) comprises in at least 40 weight-% of foamed closed-cell polymer material and in 10 - 50 weight-% of expandable graphite, calculated from the weight of the firestop board, and the firestop board is made of the foamed closed-cell polymer material, in which the expandable graphite is blended,
**characterized in that** the foamed polymer material comprises polyisocyanurate (PIR), polyurethane, polyurea, or a combination of these, and the density of the material of the firestop board is 80 - 400 kg/m³.

2. The firestop board according to claim 1, **characterized in that** the firestop board (1) further comprises one or more inorganic additives.

3. The firestop board according to claim 2, **characterized in that** the inorganic additive comprises aluminium hydroxide, magnesium hydroxide, monopotassium phosphate, monoammonium phosphate, ammonium sulphate, calcium sulphate, hydrated calcium sulphate, sodium bicarbonate, calcium carbonate, potassium carbonate, magnesium carbonate, borax, or a combination of these.

4. The firestop board according to claim 2 or 3, **characterized in that** the firestop board (1) comprises an inorganic additive in 10 - 50 weight-%, calculated from the weight of the board.

5. The firestop board according to any of the preceding claims 2 to 4, **characterized in that** the inorganic additive is blended in the foamed polymer material.

6. The firestop board according to any of the preceding claims, **characterized in that** the firestop board (1) comprises reinforcing fibres.

7. The firestop board according to any of the preceding claims, **characterised in that** the thickness of the firestop board (1) is at least 10 mm.

8. A firestop element, in which one or more through holes is/are arrangeable, **characterized in that** the firestop element comprises at least one firestop board (1) according to any of the preceding claims 1 to 7, and the firestop board further comprises a framework around the firestop board/boards, and/or the firestop element comprises a building board provided on at least one surface of the firestop board to cover the firestop board.

9. A fire separating element comprising a fire stop, **characterized in that** the fire stop is formed by providing a construction with at least one firestop board (1) according to any of the preceding claims 1 to 7, and/or with a firestop element according to claim 8.

10. The fire separating element according to claim 9, **characterized in that** at least one surface of the firestop board (1) is provided with a building board covering the firestop board; preferably, both surfaces of the firestop board are provided with a building board covering the firestop board.

11. The fire separating element according to claim 9 or 10, **characterized in that** the fire separating element is a fire separating wall structure.

12. The fire separating element according to claim 11, **characterized in that** the wall structure is provided with a studwork in the horizontal and vertical directions around the firestop board and/or the firestop element.

13. The fire separating element according to any of the preceding claims 9 to 12, **characterized in that** one or more through holes are arranged in the firestop board (1) and/or the firestop element.

14. A method for forming a fire stop in a fire separating element comprises:
- arranging at least one firestop board according to any of the preceding claims 1 to 7 as a part of a fire separating structure, and
- providing the firestop board with a dimensionally accurate opening for a through hole, where necessary, and arranging a pipe, conduit and/or cable to be passed via the through hole without separate sealing.

15. The method according to claim 14, **characterized in that** a fire separating element is a fire separating wall structure.

## Patentansprüche

1. Brandschutzplatte (1), in der ein oder mehrere Durchgangslöcher (2) für Rohre, Leitungen und/oder Kabel anordenbar sind, und wobei sich die Brandschutzplatte im Brandfall ausdehnt und das Durchgangsloch abdichtet, wobei die Brandschutzplatte (1) mindestens 40 Gew.-% geschäumtes geschlossenzelliges Polymermaterial und 10 bis 50 Gew.-% expandierbaren Graphit umfasst, berechnet aus dem Gewicht der Brandschutzplatte,
und die Brandschutzplatte aus dem geschäumten geschlossenzelligen Polymermaterial hergestellt ist, in das der expandierbare Graphit eingemischt ist,
**dadurch gekennzeichnet, dass** das geschäumte Polymermaterial Polyisocyanurat (PIR), Polyurethan, Polyharnstoff oder eine Kombination davon umfasst und die Dichte des Materials der Brandschutzplatte 80 bis 400 kg/m3 beträgt.

2. Brandschutzplatte nach Anspruch 1, **dadurch gekennzeichnet, dass** die Brandschutzplatte (1) ferner einen oder mehrere anorganische Zusatzstoffe umfasst.

3. Brandschutzplatte nach Anspruch 2, **dadurch gekennzeichnet, dass** das anorganische Additiv Aluminiumhydroxid, Magnesiumhydroxid, Monokaliumphosphat, Monoammoniumphosphat, Ammoniumsulfat, Calciumsulfat, hydratisiertes Calciumsulfat, Natriumbicarbonat, Calciumcarbonat, Kaliumcarbonat, Magnesiumcarbonat, Borax oder eine Kombination davon umfasst.

4. Brandschutzplatte nach Anspruch 2 oder 3, **dadurch gekennzeichnet, dass** die Brandschutzplatte (1) ein anorganisches Additiv in 10 bis 50 Gew.-%, berechnet aus dem Gewicht der Platte, enthält.

5. Brandschutzplatte nach einem der vorhergehenden Ansprüche 2 bis 4, **dadurch gekennzeichnet, dass** das anorganische Additiv in das aufgeschäumte Polymermaterial eingemischt ist.

6. Brandschutzplatte nach einem der vorhergehenden Ansprüche, **dadurch gekennzeichnet, dass** die Brandschutzplatte (1) Verstärkungsfasern umfasst.

7. Brandschutzplatte nach einem der vorhergehenden Ansprüche, **dadurch gekennzeichnet, dass** die Dicke der Brandschutzplatte (1) mindestens 10 mm beträgt.

8. Brandschutzelement, in dem ein oder mehrere Durchgangslöcher anordenbar sind, **dadurch gekennzeichnet, dass** das Brandschutzelement mindestens eine Brandschutzplatte (1) nach einem der vorhergehenden Ansprüche 1 bis 7 umfasst und die Brandschutzplatte ferner einen Rahmen um die Brandschutzplatte/-platten herum umfasst, und/oder das Brandschutzelement eine Bauplatte umfasst, die auf mindestens einer Oberfläche der Brandschutzplatte vorgesehen ist, um die Brandschutzplatte abzudecken.

9. Brandtrennelement, umfassend einen Brandschutz, **dadurch gekennzeichnet, dass** der Brandschutz gebildet wird, indem eine Konstruktion mit mindestens einer Brandschutzplatte (1) nach einem der vorangehenden Ansprüche 1 bis 7 und/oder mit einem Brandschutzelement nach Anspruch 8 bereitgestellt wird.

10. Brandtrennelement nach Anspruch 9, **dadurch gekennzeichnet, dass** mindestens eine Oberfläche der Brandschutzplatte (1) mit einer die Brandschutzplatte abdeckenden Bauplatte versehen ist; vorzugsweise beide Oberflächen der Brandschutzplatte mit einer Bauplatte versehen sind, die die Brandschutzplatte bedeckt.

11. Brandtrennelement nach Anspruch 9 oder 10, **dadurch gekennzeichnet, dass** das Brandtrennelement eine Brandtrennwandkonstruktion ist.

12. Brandtrennelement nach Anspruch 11, **dadurch gekennzeichnet, dass** die Wandkonstruktion in horizontaler und vertikaler Richtung um die Brandschutzplatte und/oder das Brandschutzelement herum mit einem Ständerwerk versehen ist.

13. Brandtrennelement nach einem der vorhergehenden Ansprüche 9 bis 12, **dadurch gekennzeichnet, dass** in der Brandschutzplatte (1) und/oder dem Brandschutzelement ein oder mehrere Durchgangslöcher angeordnet sind.

14. Verfahren zum Bilden eines Brandschutzes in einem Brandtrennelement umfasst:
- Anordnen mindestens einer Brandschutzplatte nach einem der vorangehenden Ansprüche 1 bis 7 als Teil einer Brandtrennstruktur, und
- Versehen der Brandschutzplatte mit einer maßgenauen Öffnung für ein Durchgangsloch, falls erforderlich, und Anordnen eines Rohrs, einer Leitung und/oder eines Kabels, das durch das Durchgangsloch hindurchgeführt werden soll, ohne separates Abdichten.

15. Verfahren nach Anspruch 14, **dadurch gekennzeichnet, dass** ein Brandtrennelement eine Brandtrennwandkonstruktion ist.

## Revendications

1. Panneau coupe-feu (1), dans lequel un ou plusieurs trous traversants (2) pour tuyaux, conduits et/ou câbles peuvent être ménagés, et lequel panneau coupe-feu se dilate dans une situation d'incendie, scellant le trou traversant, dans lequel le panneau coupe-feu (1) comprend au moins 40 % en poids de matériau polymère expansé à cellules fermées et 10 à 50 % en poids de graphite expansible, calculé à partir du poids du panneau coupe-feu, et le panneau coupe-feu est constitué du matériau polymère expansé à cellules fermées, dans lequel le graphite expansible est mélangé, **caractérisé en ce que** le matériau polymère expansé comprend du polyisocyanurate (PIR), du polyuréthane, de la polyurée, ou une combinaison de ceux-ci, et la densité du matériau du panneau coupe-feu est de 80 à 400 kg/m3.

2. Panneau coupe-feu selon la revendication 1, **caractérisé en ce que** le panneau coupe-feu (1) comprend en outre un ou plusieurs additifs inorganiques.

3. Panneau coupe-feu selon la revendication 2, **caractérisé en ce que** l'additif inorganique comprend de l'hydroxyde d'aluminium, de l'hydroxyde de magnésium, du phosphate monopotassique, du phosphate monoammonique, du sulfate d'ammonium, du sulfate de calcium, du sulfate de calcium hydraté, du bicarbonate de sodium, du carbonate de calcium, du carbonate de potassium, du carbonate de magnésium, du borax ou une combinaison de ceux-ci.

4. Panneau coupe-feu selon la revendication 2 ou 3, **caractérisé en ce que** le panneau coupe-feu (1) comprend un additif inorganique à 10 - 50 % en poids, calculé à partir du poids du panneau.

5. Panneau coupe-feu selon l'une quelconque des revendications précédentes 2 à 4, **caractérisé en ce que** l'additif inorganique est mélangé dans le matériau polymère expansé.

6. Panneau coupe-feu selon l'une quelconque des revendications précédentes, **caractérisé en ce que** le panneau coupe-feu (1) comprend des fibres de renforcement.

7. Panneau coupe-feu selon l'une quelconque des revendications précédentes, **caractérisé en ce que** l'épaisseur du panneau coupe-feu (1) est d'au moins 10 mm.

8. Élément coupe-feu, dans lequel un ou plusieurs trous traversants peuvent être ménagés, **caractérisé en ce que** l'élément coupe-feu comprend au moins un panneau coupe-feu (1) selon l'une quelconque des revendications précédentes 1 à 7, et le panneau coupe-feu comprend en outre une ossature autour du ou des panneaux coupe-feu, et/ou l'élément coupe-feu comprend un panneau de construction prévu sur au moins une surface du panneau coupe-feu pour recouvrir le panneau coupe-feu.

9. Élément coupe-feu comprenant un coupe-feu, **caractérisé en ce que** le coupe-feu est formé en prévoyant une construction avec au moins un panneau coupe-feu (1) selon l'une quelconque des revendications précédentes 1 à 7, et/ou avec un élément coupe-feu selon la revendication 8.

10. Élément coupe-feu selon la revendication 9, **caractérisé en ce qu'**au moins une surface du panneau coupe-feu (1) est pourvue d'un panneau de construction recouvrant le panneau coupe-feu ; de préférence, les deux surfaces du panneau coupe-feu sont pourvues d'un panneau de construction recouvrant le panneau coupe-feu.

11. Élément coupe-feu selon la revendication 9 ou 10, **caractérisé en ce que** l'élément coupe-feu est une structure de paroi coupe-feu.

12. Élément coupe-feu selon la revendication 11, **caractérisé en ce que** la structure de paroi est pourvue d'un colombage dans les directions horizontale et verticale autour du panneau coupe-feu et/ou de l'élément coupe-feu.

13. Élément coupe-feu selon l'une quelconque des revendications précédentes 9 à 12, **caractérisé en ce qu'**un ou plusieurs trous traversants sont ménagés dans le panneau coupe-feu (1) et/ou l'élément coupe-feu.

14. Procédé pour former un coupe-feu dans un élément coupe-feu, lequel comprend :
- l'agencement d'au moins un panneau coupe-feu selon l'une quelconque des revendications précédentes 1 à 7 en tant que partie d'une structure coupe-feu, et
- la dotation du panneau coupe-feu d'une ouverture dimensionnellement précise pour un trou traversant, si nécessaire, et l'agencement d'un tuyau, d'un conduit et/ou d'un câble à faire passer via le trou traversant sans scellement séparé.

15. Procédé selon la revendication 14, **caractérisé en ce qu'**un élément coupe-feu est une structure de paroi coupe-feu.
